# EUROPEAN PATENT SPECIFICATION

(11) **EP 4 434 634 B1**
(45) Date of publication and mention of the grant of the patent: **09.09.2026**
(21) Application number: 22910800.6
(22) Date of filing: 30.11.2022
(51) Int. Cl.: B02C 15/04

(54) **PULVERIZING ROLLER, SOLID FUEL CRUSHING DEVICE, AND METHOD FOR PRODUCING CRUSHING ROLLER**
MAHLWALZE, FESTBRENNSTOFF-MAHLVORRICHTUNG UND VERFAHREN ZUR HERSTELLUNG EINER MAHLWALZE
ROULEAU DE PULVÉRISATION, DISPOSITIF DE PULVÉRISATION DE COMBUSTIBLE SOLIDE ET PROCÉDÉ DE FABRICATION D'UN ROULEAU DE PULVÉRISATION

(30) Priority: 22.12.2021 JP 2021208066
(43) Date of publication of application: 25.09.2024
(60) Divisional application: 26152888.9 / 4 706 828; 26152893.9 / 4 706 829
(73) Proprietor: Mitsubishi Heavy Industries, Ltd., Tokyo 100-8332 (JP)
(72) Inventor: YAMAGUCHI, Sotaro, Tokyo 100-8332 (JP)
(74) Representative: Studio Torta S.p.A.
(86) International application number: PCT/JP2022/044274
(87) International publication number: WO 2023/120083

(56) References cited:
- EP-B1- 3 171 980
- JP-A- 2003 190 825
- JP-A- 2016 179 428
- JP-A- 2021 130 087
- JP-A- S62 204 862
- JP-U- H0 528 430
- JP-U- H04 102 646
- JP-U- H04 106 632
- JP-U- S59 184 942
- SU-A1- 1 053 875

## Description

### [Technical Field]

The present disclosure relates to a pulverizing roller, a solid fuel pulverizing device, and a manufacturing method of a pulverizing roller.

### [Background Art]

Conventionally, solid fuel such as biomass fuel or coal is pulverized by a pulverizer (mill) into fine powder with particles within a predetermined particle diameter range and then supplied to a combustion device. Solid fuel is input to a pulverizing table, and the mill holds and pulverizes the solid fuel between the pulverizing table and a pulverizing roller. Out of the solid fuel pulverized into fine powder, pulverized fuel with particles within a predetermined particle diameter range is sorted by a classifier, carried to a boiler by a carrier gas (primary air) supplied from the outer circumference of the pulverizing table, and combusted by the combustion device. In a thermal power plant, steam is generated by heat exchange with a combustion gas generated by combustion of pulverized fuel in a boiler, a steam turbine is driven and rotated by the steam, a power generator connected to the steam turbine is driven and rotated, and thereby power is generated.

Such mills are disclosed in Patent Literature 1 and Patent Literature 2, for example.

Patent Literature 1 discloses a mill including a pulverizing roller having a base part made of high-chromium cast iron fitted to a journal housing and a hardened part partially containing a ceramic member provided to the outer circumferential face of the base part.

Further, Patent Literature 2 discloses a vertical mill including a table having a rotation axis running in the vertical direction and a plurality of rollers arranged on the upper surface of the table. A roller device has an attachment member rotatably attached to a support shaft via a bearing subjected to radial force, a first segment attached smoothly to the outer circumferential face in the radial direction about the axis of the support shaft of the attachment member and having a taper face formed tapered outward in the radial direction of the table, and a second segment having a taper face with a shape corresponding to the taper face of the first segment. The first segment and the second segment are fixed to the attachment member by attachment bolts, respectively, and integrated together to form the roller.

### [Citation List]

### [Patent Literature]

[PTL 1]
   Japanese Patent Application Laid-Open No. 2020-11164
[PTL 2]
   Japanese Patent Application Laid-Open No. S62-204862
[PTL 3]
   SU 1 053 875A1

### [Summary of Invention]

### [Technical Problem]

As described above, as pulverizing rollers provided to mills, ceramic-embedded pulverizing rollers are known in which ceramic with high wear resistance is embedded in portions that contact with solid fuel and in the outer circumferential part of the base part of the pulverizing roller. Such ceramic-embedded pulverizing rollers are superior in the wear resistance or the allowable wear amount and a longer lifetime can be expected compared to the conventional pulverizing rollers.

Ceramic-embedded pulverizing rollers have a problem that, for manufacturing reasons, it is not possible to arrange ceramic portions symmetrically with respect to a plane orthogonal to the rotation axis direction of the roller. Thus, in such a ceramic-embedded pulverizing roller, the ceramic portion is arranged unbalanced on one side in the rotation axis direction of the roller as with the roller disclosed in Patent Literature 1.

This problem will be described in detail. When a ceramic-embedded pulverizing roller is manufactured, first, molten metal is poured into a mold with a ceramic block being installed at a predetermined position inside the mold. The metal in the mold is then cooled and solidified. In such a way, a ceramic-embedded pulverizing roller in which the ceramic part (portion containing ceramic) and the base part (portion not containing ceramic) are integrally fixed to each other is manufactured. The ceramic portion has a smaller specific gravity than a molten metal and thus is subjected to floating force in the molten metal when the molten metal of the roller is cast. During casting, this floating force is utilized to press the ceramic portion against a predetermined position in the upper part of the mold and thereby fix the ceramic portion. In this state, it is necessary to shift the floating center of the ceramic part to one side (for example, the outer circumferential side) of the roller to prevent the ceramic portion from falling over to the other side (for example, the inner circumferential side) during casting. Therefore, even after completion, the ceramic portion is arranged unbalanced on one side. Because of such a reason, it is difficult to symmetrically arrange the ceramic portion of a ceramic-embedded roller.

The pulverizing roller may be more worn in one side than the other side in the rotation axis direction of the roller. This may result in a state where, even when wear on one side of the pulverizing roller has developed, wear on the other side has not so developed. In such a case, the pulverizing roller may be used inverted. That is, the roller part may be used such that the roller part is detached, the roller part is inverted to exchange the one side with the other side, and the roller part is then attached again.

When the pulverizing roller is used inverted, if the ceramic portion is arranged unbalanced on one side as with the pulverizing roller disclosed in Patent Literature 1, solid fuel will be pulverized by a portion not provided with the ceramic portion after the inversion. Thus, wear is likely to develop after inversion, and the lifetime of the pulverizing roller may be reduced.

Note that Patent Literature 2 discloses a roller in which the first segment and the second segment are integrated by being fixed by bolts. However, the roller disclosed in Patent Literature 2 is not a ceramic-embedded roller. Thus, in Patent Literature 2, it is not considered to integrate a plurality of members to form a roller in a ceramic-embedded roller.

The present disclosure has been made in view of such circumstances and intends to provide a pulverizing roller, a solid fuel pulverizing device, and a manufacturing method of a pulverizing roller that can suppress wear of a roller part and increase the lifetime of the roller part even when the roller part is used inverted.

### [Solution to Problem]

The problem is solved by the appended claims.

### [Advantageous Effects of Invention]

According to the present disclosure, wear of a roller part can be suppressed, and the lifetime of the roller part can be increased even when the roller part is used inverted.

### [Brief Description of Drawings]

[Fig. 1]

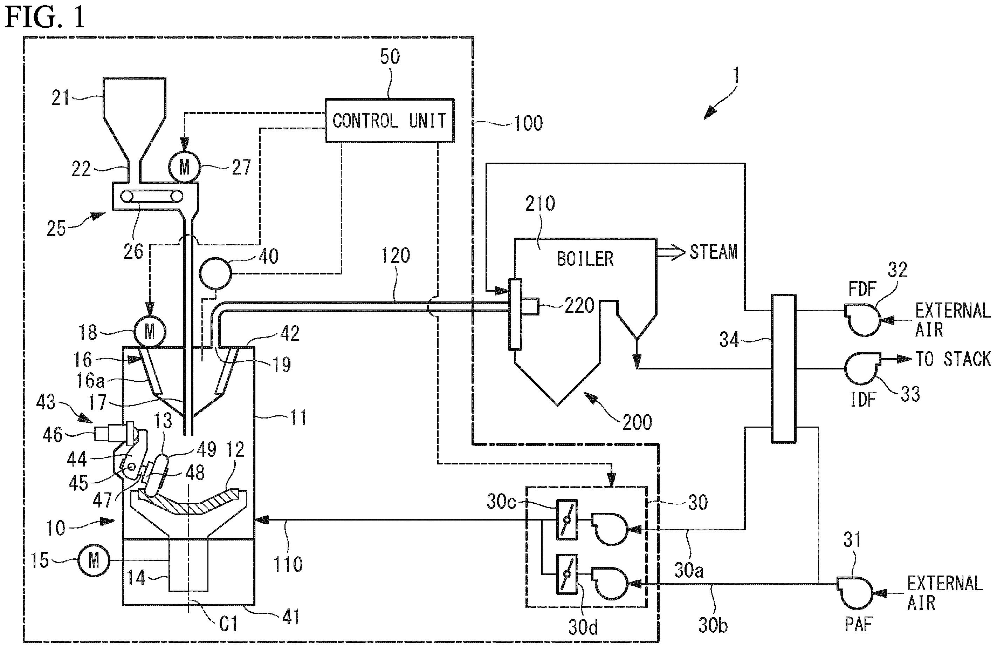

   Fig. 1 is a configuration diagram illustrating a solid fuel pulverizing device and a boiler according to an embodiment of the present disclosure.
[Fig. 2]

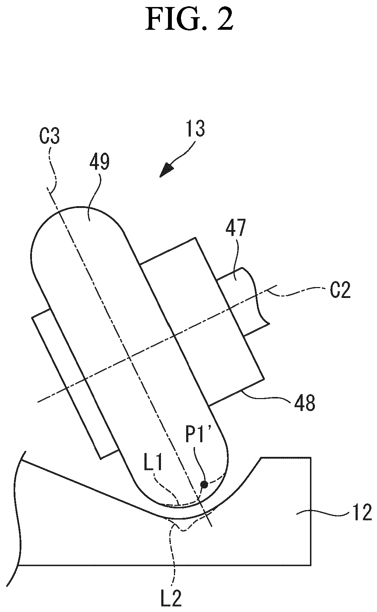

   Fig. 2 is a schematic side view of a pulverizing roller provided to the solid fuel pulverizing device according to the embodiment of the present disclosure.
[Fig. 3]

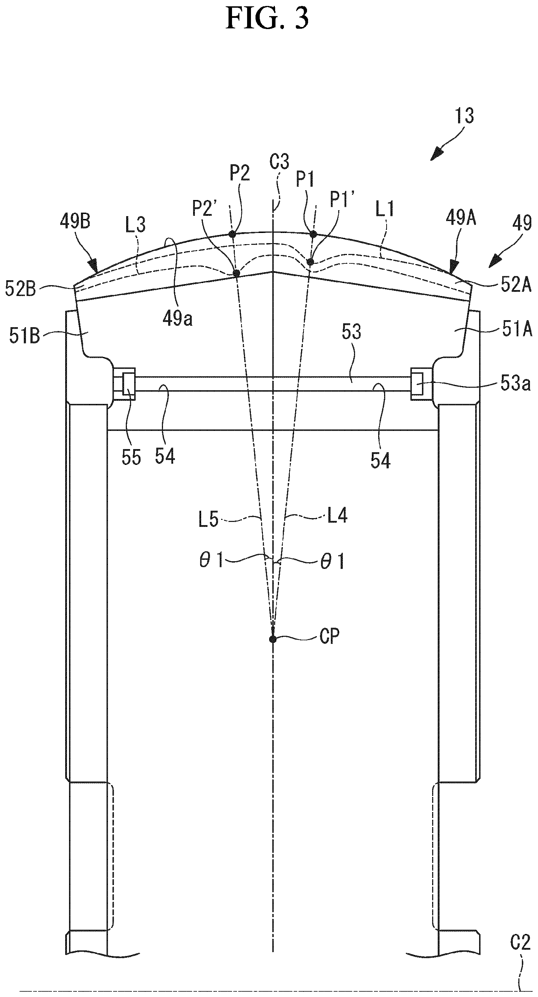

   Fig. 3 is a sectional view of a primary part of the pulverizing roller according to the embodiment of the present disclosure.
[Fig. 4]

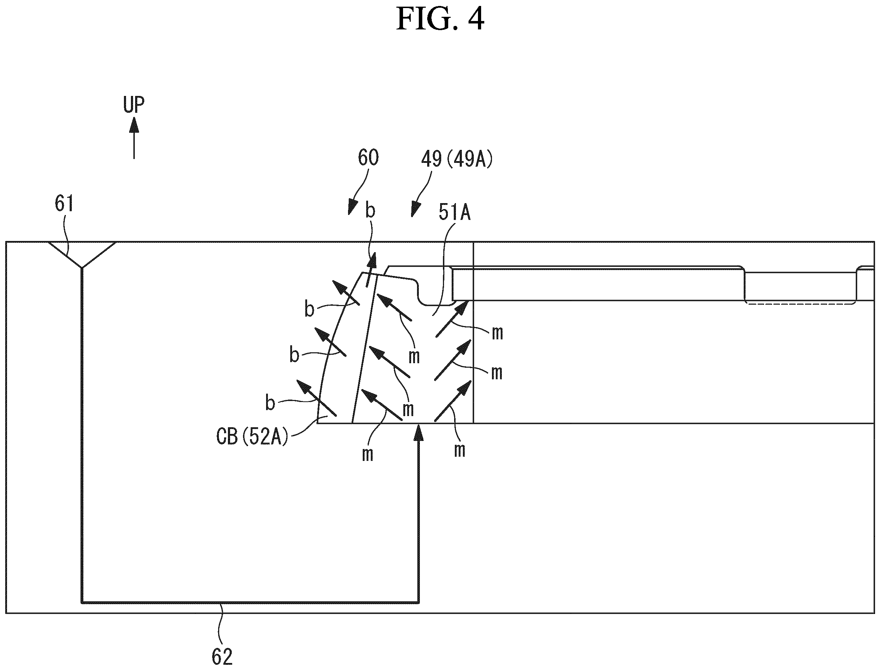

   Fig. 4 is a schematic diagram illustrating a mold used for manufacturing the pulverizing roller according to the embodiment of the present disclosure.
[Fig. 5]

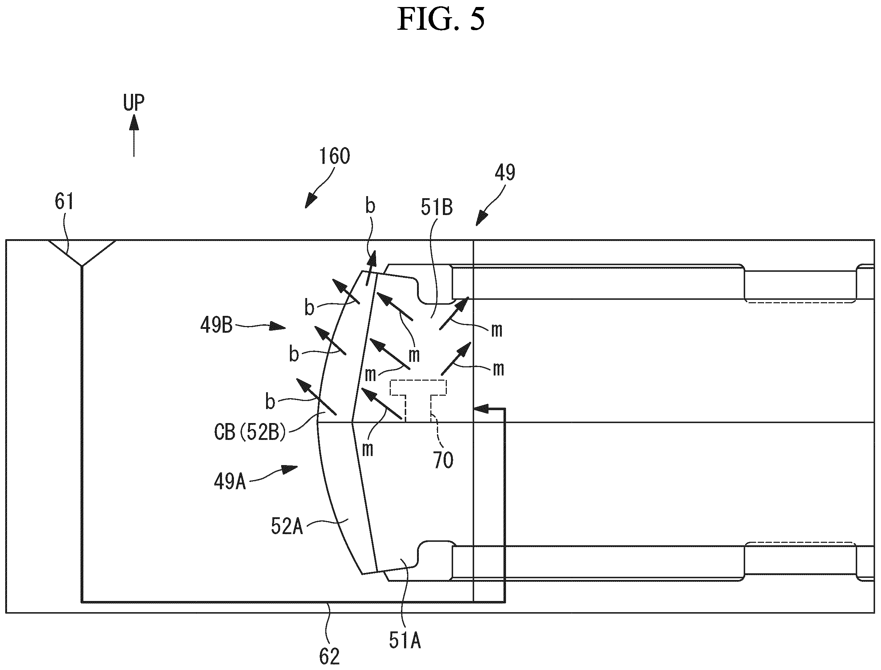

   Fig. 5 is a schematic diagram illustrating a mold used for manufacturing the pulverizing roller according to a modified example for the embodiment of the present disclosure.
[Fig. 6]

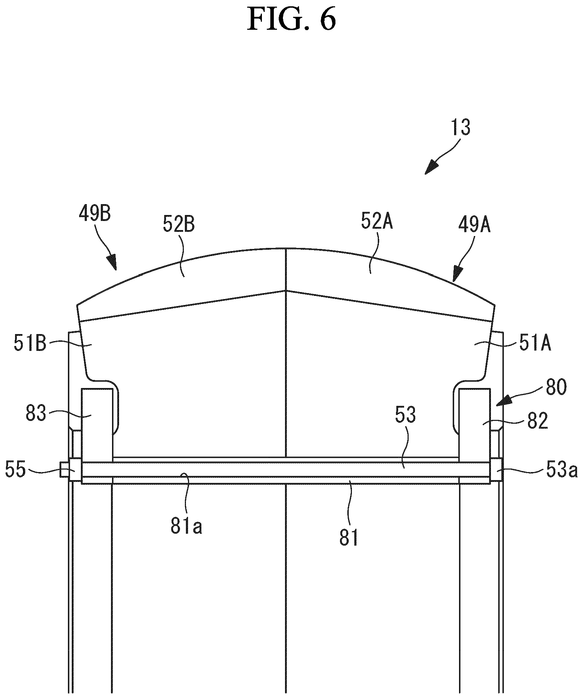

   Fig. 6 is a sectional view of a primary part of the pulverizing roller according to a modified example for the embodiment of the present disclosure.
[Fig. 7]

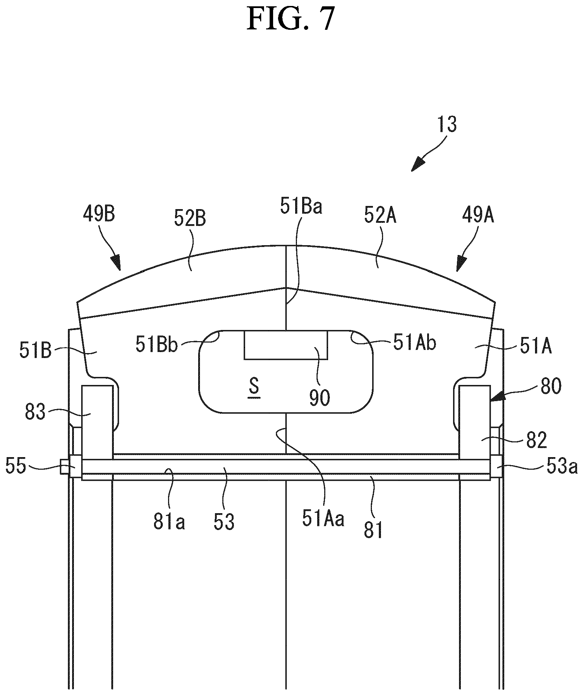

   Fig. 7 is a sectional view of a primary part of the pulverizing roller according to a modified example for the embodiment of the present disclosure.
[Fig. 8]

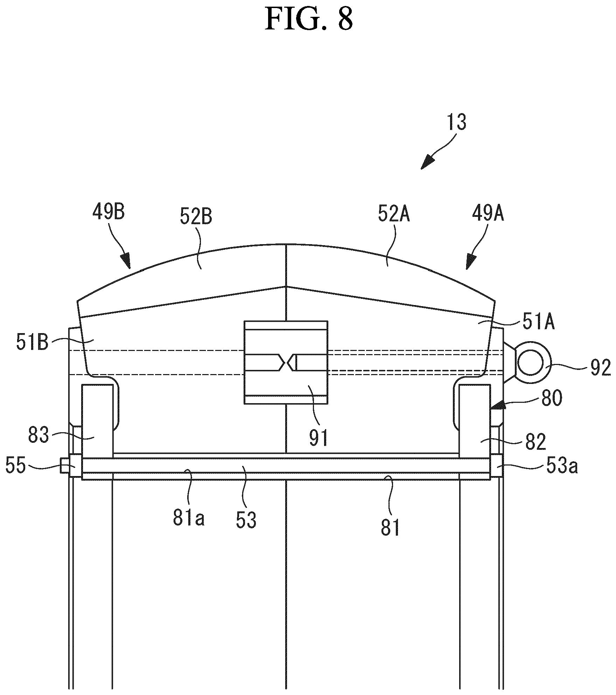

   Fig. 8 is a sectional view of a primary part of the pulverizing roller according to a modified example for the embodiment of the present disclosure.
[Fig. 9]

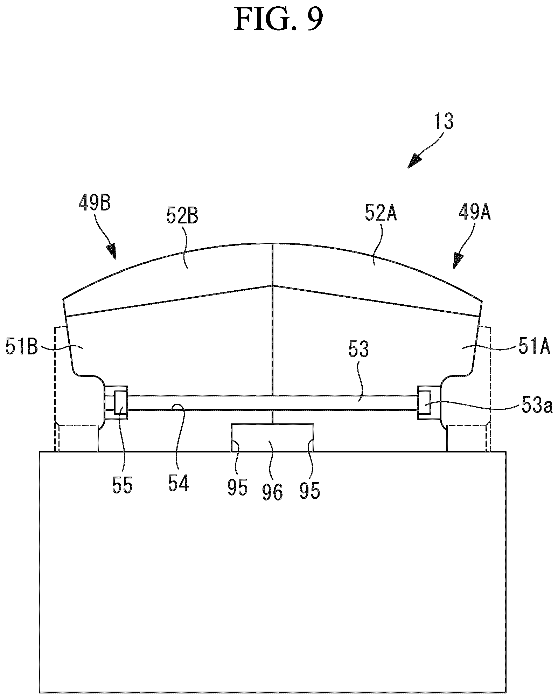

   Fig. 9 is a sectional view of a primary part of the pulverizing roller according to a modified example for the embodiment of the present disclosure.

### [Description of Embodiments]

One embodiment of a pulverizing roller, a solid fuel pulverizing device, and a manufacturing method of a pulverizing roller according to the present disclosure will be described below with reference to the drawings.

A power plant 1 according to the present embodiment includes a solid fuel pulverizing device 100 and a boiler 200.

In the following description, "above" represents a vertically upward direction, and "top" of a top part, a top face, or the like represents a vertically upper part. Further, similarly, "bottom" represents a vertically lower part, and "vertical direction" is not used in a strict sense and may include an error.

The solid fuel pulverizing device 100 of the present embodiment is a device that pulverizes solid fuel such as biomass fuel or coal as an example and produces and supplies pulverized fuel to a burner (combustion device) 220 of the boiler 200.

Although the power plant 1 including the solid fuel pulverizing device 100 and the boiler 200 illustrated in Fig. 1 has a single solid fuel pulverizing device 100, a system may be configured to have a plurality of solid fuel pulverizing devices 100 that correspond to a plurality of burners 220 of a single boiler 200, respectively.

The solid fuel pulverizing device 100 of the present embodiment includes a mill (pulverizing unit) 10, a bunker (storage unit) 21, a coal feeder (fuel feeder) 25, a fan unit (carrier gas supply unit) 30, a state detecting unit 40, and a control unit 50.

The mill 10 that pulverizes solid fuel such as coal or biomass fuel, which is to be supplied to the boiler 200, into pulverized fuel that is fine powder solid fuel may be of a form of pulverizing only coal, may be of a form of pulverizing only biomass fuel, or may be of a form of pulverizing biomass fuel together with coal.

Herein, the biomass fuel is an organic resource of renewable biological origin, for example, thinned wood, waste wood, driftwood, grasses, waste, sludge, tires, and recycle fuel (pellets or chips) or the like made therefrom, and is not limited to those presented here. Since the biomass fuel takes in carbon dioxide in a growth process of the biomass and thus serves as carbon neutral that does not emit carbon dioxide that becomes a greenhouse gas, various uses thereof have been studied.

The mill 10 includes a housing 11, a pulverizing table 12, a pulverizing roller 13, a gear (drive transmission unit) 14, a mill motor (drive unit) 15 connected to the gear 14 and configured to drive and rotate the pulverizing table 12, a rotary classifier (classifying unit) 16, a coal feed pipe (fuel feed unit) 17, and a classifier motor 18 configured to drive and rotate the rotary classifier 16.

The housing 11 is a casing that is formed in a cylindrical shape extending in the vertical direction and accommodates the pulverizing table 12, the pulverizing roller 13, the rotary classifier 16, and the coal feed pipe 17.

The coal feed pipe 17 is attached to the center of a ceiling 42 of the housing 11. The coal feed pipe 17 is to feed solid fuel guided from the bunker 21 via the coal feeder 25 into the housing 11 and is arranged vertically at the center position of the housing 11, and the bottom end thereof is provided extending into the housing 11.

The gear 14 is installed near a bottom face 41 of the housing 11, and the pulverizing table 12 configured to be rotated by drive force transmitted from the mill motor 15 connected to the gear 14 is arranged in a rotatable manner.

The pulverizing table 12 is a member that is circular in planar view, and the bottom end of the coal feed pipe 17 is arranged so as to face the pulverizing table 12. The top face of the pulverizing table 12 may have such a slope shape that is lower at the center and gradually becomes higher outward and have an outer circumferential part bent upward, for example. The coal feed pipe 17 feeds solid fuel (for example, coal or biomass fuel in the present embodiment) from above toward the pulverizing table 12 below, and the pulverizing table 12 holds and pulverizes the fed solid fuel between the pulverizing table 12 and the pulverizing roller 13.

Once solid fuel is input to the center of the pulverizing table 12 from the coal feed pipe 17, the solid fuel is guided to the outer circumferential side of the pulverizing table 12 by centrifugal force caused by rotation of the pulverizing table 12 and held and pulverized between the pulverizing table 12 and the pulverizing roller 13. The pulverized solid fuel is blown upward by a carrier gas (hereafter, referred to as primary air) guided from a carrier gas flow channel (hereafter, referred to as a primary air flow channel) 110 and guided to the rotary classifier 16.

The outer circumference of the pulverizing table 12 is provided with an air outlet (not illustrated) for causing primary air flowing in from the primary air flow channel 110 to flow out to the space above the pulverizing table 12 inside the housing 11. Swirl vanes (not illustrated) are installed to the air outlet and provide swivel force to the primary air blown out of the air outlet. The primary air provided with swivel force by the swirl vanes becomes an air flow having a swiveling velocity component and carries the solid fuel pulverized on the pulverizing table 12 to the rotary classifier 16 located above inside the housing 11. Note that, out of pulverized solid fuel, particles of solid fuel larger than a predetermined particle diameter are classified by the rotary classifier 16 or drop without reaching the rotary classifier 16, are returned to the pulverizing table 12, and are pulverized again between the pulverizing table 12 and the pulverizing roller 13.

The pulverizing roller 13 is a rotary body that pulverizes solid fuel fed from the coal feed pipe 17 to the pulverizing table 12. The pulverizing roller 13 is pressed against the top face of the pulverizing table 12 and cooperates with the pulverizing table 12 to pulverize solid fuel.

Although Fig. 1 illustrates only one pulverizing roller 13 as representative, a plurality of pulverizing rollers 13 are arranged circumferentially with equal intervals so as to press the top face of the pulverizing table 12. For example, three pulverizing rollers 13 are arranged circumferentially at equal intervals with angular intervals of 120 degrees on the outer circumferential part. In such a case, portions where the three pulverizing rollers 13 are in contact with the top face of the pulverizing table 12 (pressing portions) are at an equal distance from the rotation central axis of the pulverizing table 12.

The pulverizing roller 13 can be swung and displaced vertically by a journal head 43 and is supported so that the pulverizing roller 13 can come close to and separate away from the top face of the pulverizing table 12. When the pulverizing table 12 is rotated with the outer circumferential face of the pulverizing roller 13 being in contact with solid fuel on the top face of the pulverizing table 12, the pulverizing roller 13 is forced to rotate by being subjected to the rotational force from the pulverizing table 12. Once solid fuel is fed from the coal feed pipe 17, the solid fuel is pressed and pulverized between the pulverizing roller 13 and the pulverizing table 12. This pressing force is referred to as a pulverizing load.

A support arm 44 of the journal head 43 is supported with respect to the side face of the housing 11 by the support shaft 45 whose intermediate part runs horizontally so that the pulverizing roller 13 can be swung and displaced vertically about a support shaft 45. Further, the top end located on the vertically upper side of the support arm 44 is provided with a pressing device (pulverizing load application unit) 46. The pressing device 46 is fixed to the housing 11 and applies a pulverizing load to the pulverizing roller 13 via the support arm 44 and the like so as to press the pulverizing roller 13 against the pulverizing table 12. For example, the pulverizing load is provided by a hydraulic cylinder (not illustrated) activated by a pressure of a hydraulic oil supplied from the hydraulic device (not illustrated) installed outside the mill 10. Further, the pulverizing load may be provided by repulsive force of a spring (not illustrated).

The gear 14 is connected to the mill motor 15, transmits drive force of the mill motor 15 to the pulverizing table 12, and rotates the pulverizing table 12 about the central axis.

The rotary classifier (classifying unit) 16 is provided on the top of the housing 11 and has a hollow inverted conical external shape. The rotary classifier 16 has a plurality of blades 16a each extending vertically at the outer circumferential positions thereof. Each blade 16a is provided at a predetermined interval (equal interval) about the central axis of the rotary classifier 16.

The rotary classifier 16 is a device that classifies solid fuel pulverized by the pulverizing table 12 and the pulverizing roller 13 (hereafter, such pulverized solid fuel is referred to as "pulverized solid fuel") into particles of fuel that are larger than a predetermined particle diameter (for example, 70 to 100 µm for coal) (hereafter, pulverized solid fuel with particles exceeding a predetermined particle diameter is referred to as "coarse pulverized fuel") and particles of fuel that are smaller than or equal to the predetermined particle diameter (hereafter, pulverized solid fuel with particles smaller than or equal to a predetermined particle diameter is referred to as "pulverized fuel"). The rotary classifier 16 is provided with rotational drive force by the classifier motor 18 controlled by the control unit 50 and rotated around the coal feed pipe 17 about a circular cylindrical shaft (not illustrated) extending vertically with respect to the housing 11.

Note that a stationary classifier including a fixed casing with a hollow inverted conical shape and a plurality of stationary swirl vanes instead of the blades 16a at outer circumferential positions of the casing may be used as the classifying unit.

Pulverized solid fuel that has reached the rotary classifier 16 is classified such that, in accordance with relative balance between centrifugal force caused by rotation of the blades 16a and centripetal force caused by an air flow of the primary air, coarse pulverized fuel of a larger diameter is knocked off by the blades 16a and returned to and pulverized again by the pulverizing table 12, and pulverized fuel is guided to an outlet port 19 located in a ceiling 42 of the housing 11. The pulverized fuel classified by the rotary classifier 16 is discharged to a fine pulverized fuel supply flow channel (pulverized fuel supply pipe) 120 from the outlet port 19 together with the primary air and supplied to the burner 220 of the boiler 200.

The coal feed pipe (fuel feed unit) 17 is attached vertically so as to penetrate through the ceiling 42 of the housing 11 with the bottom end being provided extending into the housing 11 and feeds solid fuel input from above the coal feed pipe 17 to the center of the pulverizing table 12. A coal feeder 25 is connected to the top end of the coal feed pipe 17, and solid fuel is fed thereto.

The coal feeder 25 is connected to the bunker 21 via a downspout part 22 that is a pipe extending vertically from the bottom end of the bunker 21. A valve (a coal gate, not illustrated) for switching the discharge state of solid fuel from the bunker 21 may be provided on the way of the downspout part 22. The coal feeder 25 includes a transport unit 26 and a coal feeder motor 27. The transport unit 26 is, for example, a belt conveyer, which transports solid fuel discharged from the bottom end of the downspout part 22 to the top of the coal feed pipe 17 and inputs the solid fuel to inside thereof by drive force of the coal feeder motor 27. The feed amount of solid fuel fed to the mill 10 is controlled by a signal from the control unit 50 via adjustment of the moving speed of the belt conveyer of the transport unit 26, for example.

Typically, the inside of the mill 10 is supplied with the primary air for carrying pulverized fuel to the burner 220 and has a higher pressure than the coal feeder 25 or the bunker 21. Fuel is in a layered state inside the downspout part 22 connected between the bunker 21 and the coal feeder 25. This solid fuel layer serves to ensure a seal characteristic (material seal) for suppressing a reverse flow of the primary air and the pulverized fuel from the mill 10 to the bunker 21.

The fan unit 30 is a device that blows the primary air, which is for drying and carrying pulverized solid fuel to the rotary classifier 16, into the housing 11.

The fan unit 30 includes a primary air fan (PAF) 31, a hot gas flow channel 30a, a cold gas flow channel 30b, a hot gas damper 30c, and a cold gas damper 30d in the present embodiment in order to suitably adjust the flow rate and the temperature of the primary air blown into the housing 11.

In the present embodiment, the hot gas flow channel 30a supplies a part of air delivered from the primary air fan 31 as a hot gas that has passed through an air preheater (heat exchanger) 34 and thus has been heated. The hot gas damper 30c is provided to the hot gas flow channel 30a. The opening of the hot gas damper 30c is controlled by the control unit 50. The flow rate of the hot gas supplied from the hot gas flow channel 30a is determined by the opening of the hot gas damper 30c.

The cold gas flow channel 30b supplies a part of air delivered from the primary air fan 31 as a cold gas at normal temperature. The cold gas damper 30d is provided to the cold gas flow channel 30b. The opening of the cold gas damper 30d is controlled by the control unit 50. The flow rate of the cold gas supplied from the cold gas flow channel 30b is determined by the opening of the cold gas damper 30d.

In the present embodiment, the flow rate of the primary air is the total flow rate of the flow rate of a hot gas supplied from the hot gas flow channel 30a and the flow rate of a cold gas supplied from the cold gas flow channel 30b, and the temperature of the primary air is determined by a mixture ratio of the hot gas supplied from the hot gas flow channel 30a and the cold gas supplied from the cold gas flow channel 30b and is controlled by the control unit 50.

Further, for example, a part of a combustion gas discharged from the boiler 200 by a gas recirculation fan (not illustrated) may be guided to and mixed with the hot gas supplied from the hot gas flow channel 30a, and thereby the oxygen concentration of the primary air to be blown into the housing 11 from the primary air flow channel 110 may be adjusted. For example, when solid fuel with high ignitability (easy to ignite) is used, it is possible to suppress ignition of solid fuel in the path from the mill 10 to the burner 220 by adjusting the oxygen concentration of the primary air.

In the present embodiment, data measured or detected by the state detecting unit 40 of the mill 10 is transmitted to the control unit 50. For example, the state detecting unit 40 of the present embodiment is a differential pressure measuring unit, which measures, as the differential pressure in the mill 10, a differential pressure between the pressure at a portion where the primary air flows into the housing 11 from the primary air flow channel 110 and the pressure at the outlet port 19 where the primary air and the pulverized fuel are discharged to the pulverized fuel supply pipe 120 from inside of the housing 11. An increase and a decrease in this differential pressure in the mill 10 correspond to an increase and a decrease in a circulating amount of pulverized solid fuel circulating between a part near the rotary classifier 16 and a part near the pulverizing table 12 inside the housing 11 due to the classification effect of the rotary classifier 16. That is, since the amount and the particle diameter range of pulverized fuel discharged from the outlet port 19 can be adjusted by adjustment of the rotational number of the rotary classifier 16 in accordance with such a differential pressure in the mill 10, an amount of pulverized fuel corresponding to the feed amount of solid fuel to the mill 10 can be stably supplied to the burner 220 provided to the boiler 200 while the particle diameter of the pulverized fuel is maintained in a range that does not affect the combustibility of the solid fuel in the burner 220.

Further, for example, the state detecting unit 40 of the present embodiment is a temperature measuring unit, which determines the temperature of the primary air supplied into the housing 11 (mill inlet primary air temperature) or the temperature of a mixed gas of the primary air and pulverized fuel at the outlet port 19 (mill outlet primary air temperature) and controls the fan unit 30 so that respective upper limit temperatures are not exceeded. Each upper limit temperature is determined taking a possibility of ignition in accordance with characteristics of solid fuel or the like into consideration. Note that, since the primary air is cooled by being carried while drying pulverized solid fuel inside the housing 11, the primary air temperature at the mill inlet will range from normal temperature to about 300 degrees Celsius, for example, and the primary air temperature at the mill outlet will range from normal temperature to about 90 degrees Celsius, for example.

The control unit 50 is a device that controls each unit of the solid fuel pulverizing device 100.

For example, the control unit 50 may transfer a drive instruction to the mill motor 15 to control the rotational rate of the pulverizing table 12.

For example, the control unit 50 can control the rotational rate of the rotary classifier 16 to adjust the classification performance by transferring a drive instruction to the classifier motor 18 and stably supply, to the burner 220, an amount of pulverized fuel corresponding to the supply amount of solid fuel to the mill 10 while maintaining the particle diameter of the pulverized fuel in a range that does not affect the combustibility of the solid fuel in the burner 220.

Further, for example, the control unit 50 can adjust the feed amount (coal feed amount) of solid fuel to be fed to the mill 10 by transferring a drive instruction to the coal feeder motor 27.

Further, the control unit 50 can control the openings of the hot gas damper 30c and the cold gas damper 30d to adjust the flow rate and the temperature of the primary air by transferring an opening instruction to the fan unit 30. Specifically, the control unit 50 controls the openings of the hot gas damper 30c and the cold gas damper 30d so that the flow rate of the primary air to be supplied into the housing 11 and the temperature of the primary air at the outlet port 19 (mill outlet primary air temperature) are predetermined values set in association with a coal feed amount for each type of solid fuel. Note that the control of the temperature of the primary air may be performed on the temperature at the mill inlet (mill inlet primary air temperature).

For example, the control unit 50 is composed of a central processing unit (CPU), a random access memory (RAM), a read only memory (ROM), a computer readable storage medium, and the like. Further, a series of processes for implementing various functions are stored in a storage medium or the like in a form of a program as an example, and the various functions are implemented when the CPU loads such a program into the RAM or the like to perform modification or computation processing on information. Note that, for a program, a form in which the program is installed in advance in the ROM or another storage medium, a form in which the program is provided stored in a computer readable storage medium, a form in which the program is delivered via a wired or wireless communication connection, or the like may be applied. The computer readable storage medium may be a magnetic disk, a magneto-optical disk, a CD-ROM, a DVD-ROM, a semiconductor memory, a hard disk drive (HDD) or the like. Further, the HDD may be replaced with a solid state disk (SSD) or the like.

Next, the boiler 200 that generates steam by combustion of pulverized fuel supplied from the solid fuel pulverizing device 100 will be described. The boiler 200 includes a furnace 210 and the burner 220.

The burner 220 is a device that combusts pulverized fuel to form flame by using a mixed gas and secondary air, the mixed gas is a mixture of the pulverized fuel supplied from the pulverized fuel supply pipe 120 and the primary air, and the secondary air is supplied by using the air preheater 34 to heat air (external air) delivered from a forced draft fan (FDF) 32. Combustion of pulverized fuel takes place in the furnace 210, and the combustion gas at an elevated temperature is discharged to outside of the boiler 200 after passing through heat exchangers (not illustrated) such as an evaporator, a superheater, or an economizer.

The combustion gas discharged from the boiler 200 is subjected to predetermined treatment at an environmental device (a SCR (Selective Catalytic NOx Reduction) system, a dust collector, a desulfurizer, or the like, not illustrated), subjected to heat exchange with the primary air or the secondary air at the air preheater 34, guided to a stack (not illustrated) via an induced draft fan (IDF) 33, and released to the external air. The air heated by the combustion gas at the air preheater 34 and delivered from the primary air fan 31 is supplied to the hot gas flow channel 30a described above.

The feedwater to each heat exchanger of the boiler 200 is heated at an economizer (not illustrated) and then further heated by an evaporator (not illustrated) and a superheater (not illustrated), and thereby superheated steam at a high temperature and a high pressure is generated. The generated superheated steam is transferred to a steam turbine (not illustrated), which is a power generation unit, thereby the steam turbine is driven and rotated, the power generator (not illustrated) connected to the steam turbine is driven and rotated, and power is generated. Accordingly, the power plant 1 is configured.

Next, the pulverizing roller 13 according to the present embodiment will be described in detail with reference to Fig. 1 to Fig. 5.

As illustrated in Fig. 1 and Fig. 2, each pulverizing roller 13 is supported rotatably about the rotation central axis C2 with respect to the housing 11 via the journal shaft 47, the journal head 43, and the support shaft 45. The journal shaft 47 extends inclined downward to the center side of the housing 11 from a part near the side face of the housing 11. The journal shaft 47 is fixed to the journal head 43 at the base end (the end on the side face side of the housing 11). In the journal head 43, the pulverizing roller 13 is rotatably supported at the tip (the end on the center side of the mill 10) via a bearing (not illustrated). That is, the pulverizing roller 13 is rotatably supported inclined such that the upper part thereof is located closer to the center side of the housing 11 than the lower part thereof vertically above the pulverizing table 12.

As illustrated in Fig. 2, the pulverizing roller 13 has a journal housing (support part) 48 supported rotatably about the rotation central axis C2 at the tip of the journal shaft 47 and has a circular annular roller part 49 externally fitted to the journal housing 48. The journal housing 48 is provided so as to cover the tip of the journal shaft 47, and the outer circumferential face thereof is formed in a circular cylindrical shape.

Fig. 3 illustrates a primary part of a cross section of the roller part 49 when taken along a plane including a direction in which the rotation central axis C2 of the roller part 49 extends (hereafter, referred to as "axis direction cross section").

The roller part 49 has a first portion 49A arranged on the base end side in a direction in which the rotation central axis C2 extends (hereafter, referred to as "axis direction") and a second portion 49B arranged adjacent to the first portion 49A in the axis direction. In other words, the roller part 49 is divided into two of the first portion 49A and the second portion 49B in the axis direction. Herein, the base end side refers to the journal shaft 47 side to which the pulverizing roller 13 is connected and the outer circumferential side in the radial direction of the pulverizing table 12 (the right side in the drawing sheet of Fig. 3), and the tip side refers to the rotation central axis C1 (see Fig. 1) side in the radial direction of the pulverizing table 12 (the left side in the drawing sheet of Fig. 3).

The first portion 49A and the second portion 49B are fixed to each other by a fixing bolt 53. During operation of the mill 10, since the first portion 49A and the second portion 49B are arranged at positions at different distance from the rotation central axis C1 of the pulverizing table 12, these portions would be forced to rotate with different circumferential speeds. Therefore, shearing force would occur at joining faces between the first portion 49A and the second portion 49B, and the first portion 49A and the second portion 49B would be forced to move relatively in a sliding manner. Since the joining faces would be worn by the sliding if such relative motion occurred, it is preferable to fix the first portion 49A and the second portion 49B so as to restrict the relative motion thereof.

The roller part 49 is formed evenly in the circumferential direction. That is, the axis direction cross section has substantially the same structure at any positions in the circumferential direction.

Further, as illustrated in Fig. 3, the outer circumferential face 49a of the roller part 49 is curved into an arc shape centered at the center point CP in the axis direction cross section.

As illustrated in Fig. 3, the first portion 49A and the second portion 49B are line-symmetrical with respect to the center line C3. Therefore, in the following, the configuration of the first portion 49A will be described in detail, and description for the configuration of the second portion 49B will be omitted except for necessary description. Note that the center line C3 is a line that is orthogonal to the rotation central axis C2 and passes through the center of the pulverizing roller 13 in the direction in which the rotation central axis C2 extends.

In the present embodiment, the interface at which the first portion 49A and the second portion 49B abut against each other overlaps the center line C3.

As illustrated in Fig. 3, the first portion 49A has, in an integrated manner, a first base part 51A made of high-chromium cast iron fitted to the journal housing 48 and a first ceramic part (an outer circumferential part) 52A partially containing a ceramic member provided to the outer circumferential face of the first base part 51A. That is, the roller part 49 according to the present embodiment is a so-called ceramic-embedded high-chromium cast iron roller.

The first base part 51A is supported by the journal housing 48. The first base part 51A is formed in a substantially circular annular shape. Further, the first base part 51A is fitted to the journal housing 48 such that the inner circumferential face thereof is in contact with the outer circumferential face of the journal housing 48. The first ceramic part 52A is fixed to the outer circumferential part of the circular annular first base part 51A. The first ceramic part 52A is provided over substantially the entire circumferential range of the first base part 51A. That is, the first ceramic part 52A is formed in a substantially circular annular shape. Further, a bolt hole penetrating through in the axis direction is formed in the first base part 51A.

In the axis direction cross section, the outer circumferential face of the first base part 51A is sloped so as to approach the rotation central axis C2 starting from the position on the center line C3 toward the position near the base end in the axis direction. The inner circumferential face of the first base part 51A is a circular cylindrical face.

Further, the surface of the first base part 51A on the second portion 49B side (that is, the surface abutting against the second base part 51B) is a planar surface.

The first ceramic part 52A includes the ceramic member and thus has a smaller linear expansion coefficient than the first base part 51A made of high-chromium cast iron. Further, the first ceramic part 52A has higher wear resistance than the first base part 51A.

The first ceramic part 52A is formed in a substantially circular annular shape. The first ceramic part 52A covers the entire outer circumferential face of the first base part 51A from outside. The inner circumferential face of the first ceramic part 52A abuts against the outer circumferential face of the first base part 51A. The outer circumferential face of the first ceramic part 52A is curved into an arc shape centered at the center point CP in the axis direction cross section.

Further, the surface of the first ceramic part 52A on the second portion 49B side (that is, the surface abutting against the second ceramic part 52B) is a planar surface.

In such a way, the outer circumferential face of the roller part 49 is formed of the first ceramic part 52A and the second ceramic part 52B in the entire region in the axis direction.

Next, the joining form between the first portion 49A and the second portion 49B will be described.

The first portion 49A and the second portion 49B are fixed to each other by the fixing bolt 53 inserted through a straight hole defined by the bolt hole 54 formed in the first base part 51A of the first portion 49A and the bolt hole 54 formed in the second base part 51B of the second portion 49B that communicate with each other. The head 53a of the fixing bolt 53 abuts against the first base part 51A. Further, a nut 55 screwed on the tip of the fixing bolt 53 abuts against the second base part 51B. Thus, fastening of the fixing bolt 53 to the nut 55 causes the first base part 51A to be fixed to the second base part 51B. Accordingly, the first portion 49A and the second portion 49B are joined to each other. Note that the fixing bolt 53 and the nut 55 may be replaced with a so-called threaded rod without a head and nuts at both ends of the threaded rod.

The dashed line L1 of Fig. 2 and Fig. 3 represents the development state of wear of the roller part 49 that develops as the mill 10 pulverizes solid fuel. That is, in the example in the present embodiment, the roller part 49 is in a condition where a portion P1 on the base end side (that is, opposite to the tip side) of the roller part 49 (hereafter, referred to as "maximum wear point P1") is more worn than the remaining portion. As described above, the base end side represents the outer circumferential side in the radial direction of the pulverizing table 12, and the tip side represents the rotation central axis C1 (see Fig. 1) side in the radial direction of the pulverizing table 12. Further, the dashed line L2 of Fig. 2 represents the development state of wear of the pulverizing table 12. That is, the maximum wear point P1 is located in the first ceramic part 52A. Note that, in Fig. 2 and Fig. 3, the maximum wear point before wear occurs is denoted by a reference "P1", and the maximum wear point after wear has actually developed is denoted by a reference "P1'". In other words, the maximum wear point P1 before wear occurs is a point where wear is expected to be most likely to develop.

The maximum wear point P1 is a position on the outer circumferential face 49a of the roller part 49 at which a line connecting the position to the center point CP forms a predetermined angle θ1 on the base end side relative to the center line C3 (a line being orthogonal to the rotation central axis C2 and passing through the center of the pulverizing roller 13 in the direction in which the rotation central axis C2 extends). In detail, the maximum wear point P1 is a position at which the line L4 forming the predetermined angle θ1 relative to the center line C3 at the center point CP and the outer circumferential face 49a intersect with each other. Although the angle θ1 in Fig. 3 is 8 degrees as an example, the angle θ1 is not limited to 8 degrees. The position of the maximum wear point P1 differs in accordance with the specification of the mill 10 or also in accordance with solid fuel to be pulverized, for example, and the angle θ1 often occurs within a range from 3 degrees to 13 degrees (a range of 8 degrees plus or minus 5 degrees).

Further, in the present embodiment, the first ceramic part 52A in the axis direction cross section is thickest in the portion through which the line L4 forming the predetermined angle θ1 relative to the center line C3 passes.

Further, the dashed line L3 of Fig. 3 represents a development state of wear of the roller part 49 that develops as the mill 10 pulverizes solid fuel when the roller part 49 is used inverted after the roller part 49 is worn as illustrated by the dashed line L1 (that is, when the roller part 49 is once detached from the journal housing 48, the roller part 49 is inverted to exchange the base end side with the tip side, and the roller part 49 is then attached to the journal housing 48 and used again). The maximum wear point P2 in such a case is at the position symmetrical with respect to the center line C3. In detail, the maximum wear point P2 is a point on the line L5 line-symmetrical with respect to the line L4 forming the predetermined angle θ1 relative to the center line C3. That is, the maximum wear point P2 after the roller part 49 is inverted is located in the second ceramic part 52B. Note that, in Fig. 3, the maximum wear point before wear occurs is denoted by a reference "P2", and the maximum wear point after wear has actually developed is denoted by a reference "P2'". In other words, the maximum wear point P2 before wear occurs is a point where wear is expected to be most likely to develop.

Note that, while Fig. 3 depicts the state where the roller part 49 is not inverted, the second ceramic part 52B will be located on the base end side (the right side in Fig. 3) from the center line C3 in a state where the roller part 49 is actually inverted. Therefore, the maximum wear point P2 is also located on the base end side (the right side in Fig. 3) from the center line C3 in the same manner as the maximum wear point P1 occurring before inversion.

Next, a method of manufacturing the roller part 49 will be described with reference to Fig. 4. The reference "UP" in Fig. 4 represents "above" in the vertical direction.

First, before the roller part 49 is manufactured, the first portion 49A is first manufactured.

Before the first portion 49A is manufactured, ceramic particles are first shaped into a block shape (a shape corresponding to the first ceramic part 52A) to manufacture the ceramic block CB (see Fig. 4) forming a part of the first ceramic part 52A. The ceramic block is made of bound particulate ceramics, and a relatively large number of voids are formed between ceramic particles. The external shape of the ceramic block CB is substantially the same as the external shape of the first ceramic part 52A.

Next, the manufactured ceramic block CB is installed at a predetermined position in a mold 60. In this state, the ceramic block CB is held between the ceiling face and the bottom face of the mold 60, and thereby the ceramic block CB is fixed to a predetermined position. In the present embodiment, the ceramic block CB is fixed to the predetermined position by being held between the ceiling face and the bottom face of the mold 60 and, during casting, also by being subjected to floating force as described later.

Next, molten metal is poured into the mold 60 from a sprue 61 through a runner 62. Accordingly, the molten metal is filled in the mold 60 (see arrows m). In this state, the ceramic block CB has a smaller specific gravity than the molten metal and thus pressed against predetermined positions on the inner circumferential face of the mold 60 by the floating force (see arrows b), as illustrated in Fig. 4. Further, in this state, the molten metal flows into the voids formed between the ceramic particles of the ceramic block CB.

Next, the molten metal is cooled and solidified. Accordingly, the roller part 49 is completed in which the first ceramic part 52A, in which metal has entered the voids between the ceramic particles of the ceramic block CB and which is superior in wear resistance, and the first base part 51A, which is formed of only the solidified metal, are integrated with each other.

In such a way, the first portion 49A of the present embodiment is manufactured by inserting the first base part 51A and the first ceramic part 52A into each other. Note that, before the first portion 49A is casted, the bolt hole 54 may be provided by being cast as a hole. Since the first base part 51A has high hardness, it would be difficult to form the bolt hole 54 after solidification. Accordingly, it is possible to easily form the bolt hole 54 by providing it by casting a hole in such a way.

Next, the second portion 49B is manufactured. Since the method of manufacturing the second portion 49B is the same as the method of manufacturing the first portion 49A, the description thereof will be omitted.

Next, the fixing bolt 53 and the nut 55 are fastened to each other to join the first portion 49A and the second portion 49B to each other. In such a way, the roller part 49 is manufactured. Note that, if the first portions 49A and the second portions 49B are joined in a factory and the joined roller parts 49 are transported to an assembly site of the mill 10, the on-site assembly man-hours are reduced, and the total cost can be reduced.

According to the present embodiment, the following effects and advantages are achieved.

In the present embodiment, the first portion 49A is provided on one side (the base end side) from the center line C3 in the axis direction, and the second portion 49B is provided on the other side (the tip side) from the center line C3 in the axis direction. Accordingly, the ceramic part 52 (the first ceramic part 52A and the second ceramic part 52B) having superior wear resistance can be provided on both the one side and the other side of the roller part 49. Therefore, even when the roller part 49 is used inverted (that is, when the roller part 49 is detached, the roller part 49 is inverted to exchange the one side with the other side, and the roller part 49 is attached and used again), solid fuel can be pulverized between the ceramic part 52 and the pulverizing table 12, and wear of the roller part 49 can thus be suppressed. Therefore, the lifetime of the roller part 49 can be increased.

Further, in the present embodiment, the roller part 49 has the first portion 49A and the second portion 49B. Accordingly, it is possible to manufacture the first portion 49A and the second portion 49B separately. Therefore, the first portion 49A and the second portion 49B, which are manufactured separately, are fixed to each other, and thereby the ceramic part 52 (the first ceramic part 52A and the second ceramic part 52B) can be provided on both sides of one side and the other side in the axis direction in a simple manner.

Further, since the first portion 49A and the second portion 49B can be manufactured separately, the volume of a component to be manufactured in a single step can be reduced compared to a case where the first portion 49A and the second portion 49B are manufactured at once. Accordingly, since the volume of the member to be manufactured in a single casting step can be reduced in manufacturing of the first portion 49A and the second portion 49B by casting, the amount of molten metal required for a single casting step can be reduced. Therefore, the blast furnace for manufacturing molten metal can be reduced in size. Thus, the facility for manufacturing the pulverizing roller 13 can be space saving, and the initial cost of the facility can be reduced.

Further, since the first portion 49A and the second portion 49B can be manufactured separately, even when a defect occurs during the manufacturing of each portion, it is not required to discard the whole roller part 49, and the amount of waste can be reduced. Therefore, the yield in manufacturing the pulverizing roller 13 can be improved. Further, if a portion that would otherwise be discarded is remelted and reused in re-manufacturing of the roller part 49, the cost for melting can be reduced.

Further, since the first ceramic part 52A and the second ceramic part 52B can also be manufactured separately, the amount of waste can also be reduced in the same manner in manufacturing of the ceramic block CB.

### [Modified Example 1]

Next, a modified example for the present embodiment will be described with reference to Fig. 5. The reference "UP" in Fig. 5 represents "above" in the vertical direction.

The present modified example differs from the above embodiment in a method of manufacturing the second portion 49B and a method of joining the first portion 49A and the second portion 49B to each other. Since other configurations or the like are the same as those in the above embodiment, the same configuration or the like are labeled with the same reference, and the detailed description thereof will be omitted.

In the present modified example, the first portion 49A and the second portion 49B are joined and integrated with each other by casting. In detail, the first portion 49A in a complete state is arranged on the bottom inside the mold 160. In this state, the first portion 49A is sufficiently preheated. When the first portion 49A is arranged inside the mold 160 and molten metal is then poured, the first portion 49A would serve the same function as a chill during casting and thus cool and make the molten metal shrink, which may generate a shrinkage cavity inside the second portion 49B. In contrast, with preheating of the first portion 49A as with the present embodiment, this reduces the degree of cooling of the molten metal and therefore can suppress occurrence of a shrinkage cavity.

Note that the method of manufacturing of the first portion 49A is the same as that in the above embodiment.

Next, the manufactured ceramic block CB for the second portion 49B is installed at a predetermined position inside the mold 160. In this state, the ceramic block CB is held between the ceiling face of the mold 160 and the first portion 49A (the first ceramic part 52A), and thereby the ceramic block CB is fixed to a predetermined position.

Next, molten metal is poured into the mold 160 from a sprue 61 through a runner 62. In this state, the molten metal is poured into a space above the first portion 49A. Accordingly, the molten metal is filled in the mold 160 (see arrows m).

Next, the molten metal is cooled and solidified. Accordingly, the second portion 49B is manufactured. In this state, the second portion 49B is manufactured joined and integrated with the first portion 49A.

In the present modified example, the roller part 49 is manufactured in such a way.

According to the present modified example, since the second portion 49B is made to have a shape corresponding to the joining face of the first portion 49A, it is not necessary to apply machining or the like to the joining face of the first portion 49A and the joining face of the second portion 49B. Therefore, such a machining step can be omitted.

Note that, as illustrated by the dashed line of Fig. 5, the first portion 49A may have a protruding part 70 having a substantially T-shape in a cross section. The protruding part 70 protrudes from a face of the first base part 51A on the second portion 49B side. The protruding part 70 is formed to be integrated with the first base part 51A when the first portion 49A is cast.

With such a configuration, the protruding part 70 is embedded in the second portion 49B when the second portion 49B is manufactured. Thus, the first portion 49A and the second portion 49B can be more firmly joined to each other.

As described above, in the present modified example, the first portion 49A and the second portion 49B are joined to each other by casting. Therefore, the fixing bolt 53 and the nut 55 described in the above embodiment are not provided to the roller part 49. Further, the bolt hole 54 is not formed in the first base part 51A and the second base part 51B.

### [Modified Example 2]

Next, a modified example for the present embodiment will be described with reference to Fig. 6.

The present modified example differs from the above embodiment in a method of joining the first portion 49A and the second portion 49B to each other. Since other configurations or the like are the same as those in the above embodiment, the same configuration or the like are labeled with the same reference, and the detailed description thereof will be omitted.

In the present modified example, a fixing part 80 is used to join the first portion 49A and the second portion 49B to each other. The fixing part 80 has, in an integrated manner, a circular cylindrical part 81 provided between the journal housing 48 and the set of the first base part 51A and the second base part 51B, a first abutment part 82 extending radially and outward from one end face in the axis direction of the circular cylindrical part 81 and abutting against one end in the axis direction of the first base part 51A, and a second abutment part 83 extending radially and outward from the other end in the axis direction of the circular cylindrical part 81 and abutting against the other end face in the axis direction of the second base part 51B.

The fixing part 80 is formed of a material having lower hardness and higher machinability than the first base part 51A and the second base part 51B (for example, carbon steel).

In the circular cylindrical part 81, a bolt hole 81a through which the fixing bolt 53 is inserted is formed.

In the present modified example, the first base part 51A is externally fitted to the outer circumferential part of the journal housing 48 via the circular cylindrical part 81. Further, the second base part is externally fitted to the outer circumferential part of the journal housing 48 via the circular cylindrical part 81.

In the present modified example, the first abutment part 82 and the second abutment part 83 are fixed to each other by the fixing bolt 53 inserted through the circular cylindrical part 81. The head 53a of the fixing bolt 53 abuts against the first abutment part 82. Further, the nut 55 screwed to the tip of the fixing bolt 53 abuts against the second abutment part 83. Thus, when the fixing bolt 53 is fastened to the nut 55, the first abutment part 82 and the second abutment part 83 hold the first base part 51A and the second base part from both sides in the axis direction. Therefore, the first portion 49A and the second portion 49B are joined to each other.

Further, since the fixing part 80 has lower hardness than the first base part 51A and the like, machining can be easily applied to the fixing part 80. Accordingly, compared to a case where the bolt hole 81a is formed in the first base part 51A and the like, the fixing bolt 53 can be more easily inserted. Therefore, the pulverizing roller 13 can be easily manufactured.

As described above, in the present modified example, the fixing part 80 is used to join the first portion 49A and the second portion 49B to each other. Therefore, the fixing bolt 53 and the nut 55 described in the above embodiment are not provided to the roller part 49. Further, the bolt hole 54 is not formed in the first base part 51A and the second base part 51B.

### [Modified Example 3]

Next, a modified example for the present embodiment will be described with reference to Fig. 7.

The present modified example differs from the above embodiment in that the first portion 49A and the second portion 49B each have a recess. Since other configurations or the like are the same as those in the above embodiment, the same configuration or the like are labeled with the same reference, and the detailed description thereof will be omitted.

In the present modified example, the first base part 51A has a first recess 51Ab recessed from a first abutment face 51Aa abutting against the second base part 51B. Further, the second base part has a second recess 51Bb recessed from a second abutment face 51Ba abutting against the first base part 51A.

Further, the first recess 51Ab and the second recess 51Bb form a closed space S.

In the present modified example, the first base part 51A and the second base part each have a recess. This can reduce the volumes of the first base part 51A and the second base part 51B compared to a configuration having no recess. Accordingly, for example, in manufacturing of the first portion 49A and the second portion 49B by casting, the amount of molten metal required for a single casting step can be reduced. Therefore, the blast furnace for manufacturing molten metal can be reduced in size. Thus, the facility for manufacturing the pulverizing roller 13 can be space saving, and the initial cost of the facility can be reduced.

Further, a detecting unit 90 that detects wear of the first ceramic part 52A and the second ceramic part 52B may be provided in the closed space S formed of the first recess 51Ab and the second recess 51Bb. This enables detection of wear of the first ceramic part 52A and the second ceramic part 52B. Further, because the detecting unit 90 is provided in the recess formed of the first base part 51A and the second base part 51B, the distance between the detecting unit 90 and an object to be detected by the detecting unit 90 (the first ceramic part 52A and the second ceramic part 52B in the present modified example) can be relatively shorter. Therefore, the structure of a wear detecting unit can be simplified.

Further, since the detecting unit 90 is provided in the closed space S, pulverized solid fuel or the like are less likely to come into contact with the detecting unit 90. Therefore, the detecting unit 90 can be made less likely to be damaged.

Note that, as a wear detection method performed by the detecting unit 90, an electrical method using a probe, a method using sound waves, or the like may be used.

### [Modified Example 4]

Next, a modified example for the present embodiment will be described with reference to Fig. 8. The present modified example differs from the above embodiment in that a hang piece 91 is interposed between the joining faces of the first portion 49A and the second portion 49B. Since other configurations or the like are the same as those in the above embodiment, the same configuration or the like are labeled with the same reference, and the detailed description thereof will be omitted.

In the present modified example, as described above, the hang piece 91 is interposed between the joining faces of the first portion 49A and the second portion 49B. An eye bolt 92 is engaged with the hang piece 91.

The pulverizing roller 13 is provided with a hang bolt hole used in installation, maintenance, or the like of the mill 10. The hang bolt hole may be integrated with the roller part 49 by casting a hang piece made of carbon, which is easily machined, into the roller part 49. During this casting, a part of the hang piece may be melted, and a metal melted from the hang piece may be mixed into the metallographic structure of the base part of the roller part 49.

In contrast, in the present modified example, since the hang piece 91 is interposed between the joining faces of the first portion 49A and the second portion 49B, mixture of dissimilar metals during casting can be suppressed.

### [Modified Example 5]

Next, a modified example for the present embodiment will be described with reference to Fig. 9. The present modified example differs from the above embodiment in that the roller part 49 and the journal housing 48 are engaged with each other. Since other configurations or the like are the same as those in the above embodiment, the same configuration or the like are labeled with the same reference, and the detailed description thereof will be omitted.

In the present modified example, the first base part 51A and the second base part each have an engagement recess 95 recessed from the face abutting against the journal housing 48. The journal housing 48 has an engagement protrusion 96 on the face abutting against the first base part 51A and the second base part 51B, and the engagement protrusion 96 is accommodated in the engagement recess 95 and thereby engaged with the engagement recess 95.

In the present modified example, the journal housing 48 has the engagement protrusion 96 engaged with the engagement recess 95. Accordingly, the engagement between the engagement recess 95 and the engagement protrusion 96 restricts relative motion between the journal housing 48 and the set of the first base part 51A and the second base part 51B. Accordingly, the journal housing 48 and the set of the first base part 51A and the second base part can be firmly fixed to each other.

Further, the engagement protrusion 96 is accommodated in the engagement recess 95. Accordingly, compared to a case where an engagement part between the roller part 49 and the journal housing 48 is provided to the end in the axis direction of the pulverizing roller 13, the pulverized solid fuel or the like are less likely to come into contact with the engagement protrusion 96. Therefore, the engagement protrusion 96 can be made less likely to be worn. Note that the engagement protrusion 96 may be detachable from the journal housing 48 to allow the pulverizing roller 13 to be mounted from only one side of the journal housing 48. Specifically, the mounting may be performed in the order of first installing the first portion 49A to the journal housing 48, subsequently installing the engagement protrusion 96, further installing and coupling the second portion 49B.

Further, compared to a case where an engagement part between the roller part 49 and the journal housing 48 is provided to the end in the axis direction of the pulverizing roller 13, it is possible to reduce the length in the axis direction of the pulverizing roller 13 while maintaining the width of the pulverizing face. Thus, even when the pulverizing surface of the pulverizing roller 13 can be installed closer to the outside of the pulverizing table 12 even on the pulverizing table 12 having the same diameter. It is therefore possible to realize pulverizing units having a size close to a larger mill while suppressing an increase in the outer diameter of the housing 11 that accommodates these pulverizing units, and it is possible to realize a compact mill having a large capacity.

### [Reference Signs List]

- 1: power plant
- 10: mill
- 11: housing
- 12: pulverizing table
- 13: pulverizing roller
- 14: gear
- 15: mill motor
- 16: rotary classifier
- 16a: blade
- 17: coal feed pipe
- 18: classifier motor
- 19: outlet port
- 21: bunker
- 22: downspout part
- 25: coal feeder
- 26: transport unit
- 27: coal feeder motor
- 30: fan unit
- 30a: hot gas flow channel
- 30b: cold gas flow channel
- 30c: hot gas damper
- 30d: cold gas damper
- 31: primary air fan
- 34: air preheater
- 40: state detecting unit
- 41: bottom face
- 42: ceiling
- 43: journal head
- 44: support arm
- 45: support shaft
- 46: pressing device
- 47: journal shaft
- 48: journal housing (support part)
- 49: roller part
- 49A: first portion
- 49B: second portion
- 49a: outer circumferential face
- 50: control unit
- 51A: first base part
- 51Aa: first abutment face
- 51Ab: first recess
- 51B: second base part
- 51Ba: second abutment face
- 51Bb: second recess
- 52A: first ceramic part (outer circumferential part)
- 52B: second ceramic part
- 53: fixing bolt
- 53a: head
- 54: bolt hole
- 55: nut
- 60: mold
- 61: sprue
- 62: runner
- 70: protruding part
- 80: fixing part
- 81: circular cylindrical part
- 81a: bolt hole
- 82: first abutment part
- 83: second abutment part
- 90: detecting unit
- 91: hang piece
- 92: eye bolt
- 95: engagement recess
- 96: engagement protrusion
- 100: solid fuel pulverizing device
- 110: primary air flow channel
- 120: pulverized fuel supply pipe
- 160: mold
- 200: boiler
- 210: furnace
- 220: burner

## Claims

1. A pulverizing roller (13) accommodated in a housing (11) and configured to hold solid fuel between a rotating pulverizing table (12) and the pulverizing roller (13) to pulverize the solid fuel, the pulverizing roller (13) being forced to rotate by being subjected to rotational force from the pulverizing table (12), the pulverizing roller (13) comprising:
a support part (48) supported rotatably about a rotation central axis (C2) with respect to the housing (11); and
a circular annular roller part (49) externally fitted to an outer circumferential part of the support part (48) and configured to pulverize solid fuel between the pulverizing table (12) and the roller part (49),
wherein the roller part (49) has a first portion (49A) and a second portion (49B), the second portion (49B) being arranged adjacent to the first portion (49A) in an axis direction and fixed to the first portion (49A), the axis direction being a direction in which the rotation central axis (C2) of the roller part (49) extends, and an outer circumference face of the roller part (49) is curved into an arc shape in a cross section in the axis direction,
**characterized in that** the first portion (49A) has, in an integrated manner, a first base part (51A) made of high-chromium cast iron externally fitted to the outer circumferential part of the support part (48), has a ceramic part (52A) partially containing a ceramic member provided to an outer circumferential face of the first base part (51A) and having higher wear resistance than the first base part (51A), and is provided on one side in the axis direction from a center line of the roller part (49),
wherein the second portion (49B) has, in an integrated manner, a second base part (51B) made of high-chromium cast iron externally fitted to the outer circumferential part of the support part (48), has a second ceramic part (52B) partially containing a ceramic member provided to an outer circumferential face of the second base part (51B) and having higher wear resistance than the second base part (51B), and is provided on the other side in the axis direction from the center line,
wherein the first ceramic part (52A) and the second ceramic part (52B) are provided to be line-symmetrical with respect to the center line in the cross section in the axis direction,
wherein the roller part (49) has a fixing part (80), the fixing part (80) having a circular cylindrical part (81), a first abutment part (82), and a second abutment part (83), the circular cylindrical part (81) being provided between the support part (48) and a set of the first base part (51A) and the second base part (51B), the first abutment part (82) extending radially and outward from one end of the circular cylindrical part (81) in the axis direction and abutting against one end face of the first base part (51A) in the axis direction, and the second abutment part (83) extending radially and outward from the other end of the circular cylindrical part (81) in the axis direction and abutting against the other end face of the second base part (51B) in the axis direction,
wherein the first base part (51A) is externally fitted to the outer circumferential part of the support part (48) via the circular cylindrical part (81),
wherein the second base part (51B) is externally fitted to the outer circumferential part of the support part (48) via the circular cylindrical part (81),
wherein the first abutment part (82) and the second abutment part (83) are fixed to each other by a bolt inserted through the fixing part (80), and
wherein the circular cylindrical part (81) is formed of a material having lower hardness than the first base part (51A) and the second base part (51B).

2. The pulverizing roller (13) according to claim 1, wherein the first portion (49A) and the second portion (49B) are fixed to each other by a fastener inserted through a straight bolt hole defined by a hole formed in the first base part (51A) and a hole formed in the second base part (51B) communicating with each other.

3. The pulverizing roller (13) according to claim 1 or 2,
wherein the first base part (51A)and/or the second base part (51B) has an engagement recess recessed from a surface abutting against the support part (48), and
wherein the support part (48) has an engagement protrusion on a surface abutting against the first base part (51A) and/or the second base part (51B), the engagement protrusion being engaged with the engagement recess by being accommodated in the engagement recess.

4. A solid fuel pulverizing device comprising:
the pulverizing roller (13) according to any one of claims 1 to 3;
a pulverizing table (12) configured to rotate and hold solid fuel between the pulverizing roller (13) and the pulverizing table (12) to pulverize the solid fuel; and
a housing (11) accommodating the pulverizing roller (13) and the pulverizing table.

5. A manufacturing method of a pulverizing roller (13) accommodated in a housing (11) and configured to hold solid fuel between a rotating pulverizing table (12) and the pulverizing roller (13) to pulverize the solid fuel, the pulverizing roller (13) being forced to rotate by being subjected to rotational force from the pulverizing table (12), wherein the pulverizing roller (13) comprises
a support part (48) supported rotatably about a rotation central axis (C2) with respect to the housing (11), and
a circular annular roller part (49) externally fitted to an outer circumferential part of the support part (48) and configured to pulverize solid fuel between the pulverizing table (12) and the roller part (49),
wherein the roller part (49) has a first portion (49A) and a second portion (49B), the second portion (49B) being arranged adjacent to the first portion (49A) in an axis direction and fixed to the first portion (49A), the axis direction being a direction in which the rotation central axis (C2) of the roller part (49) extends, and an outer circumference face of the roller part (49) is curved into an arc shape in a cross section in the axis direction,
wherein the first portion (49A) has, in an integrated manner, a first base part (51A) made of high-chromium cast iron externally fitted to the outer circumferential part of the support part (48), has a first ceramic part (52A) partially containing a ceramic member provided to an outer circumferential face of the first base part (51A) and having higher wear resistance than the first base part (51A), and is provided on one side in the axis direction from a center line of the roller part (49),
wherein the second portion (49B) has, in an integrated manner, a second base part (51B) made of high-chromium cast iron externally fitted to the outer circumferential part of the support part (48), has a second ceramic part partially containing a ceramic member provided to an outer circumferential face of the second base part (51B) and having higher wear resistance than the second base part (51B), and is provided on the other side in the axis direction from the center line,
wherein the first ceramic part (52A) and the second ceramic part (52B) are provided to be line-symmetrical with respect to the center line in the cross section in the axis direction,
wherein the roller part (49) has a fixing part (80), the fixing part (80) having a circular cylindrical part (81), a first abutment part (82), and a second abutment part (83), the circular cylindrical part (81) being provided between the support part (48) and a set of the first base part (51A) and the second base part (51B), the first abutment part (82) extending radially and outward from one end of the circular cylindrical part (81) in the axis direction and abutting against one end face of the first base part (51A) in the axis direction, and the second abutment part (83) extending radially and outward from the other end of the circular cylindrical part (81) in the axis direction and abutting against the other end face of the second base part (51B) in the axis direction,
wherein the first base part (51A) is externally fitted to the outer circumferential part of the support part (48) via the circular cylindrical part (81),
wherein the second base part (51B) is externally fitted to the outer circumferential part of the support part (48) via the circular cylindrical part (81),
wherein the first abutment part (82) and the second abutment part (83) are fixed to each other by a bolt inserted through the fixing part (80), and
wherein the circular cylindrical part (81) is formed of a material having lower hardness than the first base part (51A) and the second base part (51B),
the manufacturing method comprising steps of:
manufacturing the first portion (49A);
manufacturing the second portion (49B); and
fixing the first portion (49A) and the second portion (49B) to each other.

6. The manufacturing method of a pulverizing roller (13) according to claim 5, wherein the step of manufacturing the second portion (49B)and the step of fixing the first portion (49A) and the second portion (49B) to each other include, in a state where the first portion (49A) manufactured in the step of manufacturing the first portion (49A) is arranged inside a mold having a shape corresponding to the pulverizing roller, pouring molten metal into the mold and then cooling the molten metal to manufacture the second portion (49B) and fix the first portion (49A) and the second portion (49B) to each other in an integrated manner.

7. The manufacturing method of a pulverizing roller (13) according to claim 6, wherein the first portion (49A) has a protruding part protruding from a surface on the second portion side.

## Patentansprüche

1. Pulverisierungsswalze (13), die in einem Gehäuse (11) untergebracht und so ausgelegt ist, dass sie festen Brennstoff zwischen einem rotierenden Pulverisierungstisch (12) und der Pulverisierungswalze (13) hält, um den festen Brennstoff zu pulverisieren, wobei die Pulverisierungswalze (13) durch die Einwirkung einer Drehkraft seitens des Pulverisierungstisches (12) zur Drehung gezwungen wird, wobei die Pulverisierungswalze (13) umfasst:
ein Stützteil (48), das um eine Drehmittelachse (C2) relativ zum Gehäuse (11) drehbar gelagert ist; und
ein rundes ringförmiges Walzenteil (49), das außen an ein äußeres Umfangsteil des Stützteils (48) angepasst und so ausgelegt ist, dass es festen Brennstoff zwischen dem Pulverisierungstisch (12) und dem Walzenteil (49) pulverisiert,
wobei das Walzenteil (49) einen ersten Abschnitt (49A) und einen zweiten Abschnitt (49B) aufweist, wobei der zweite Abschnitt (49B) in Achsenrichtung benachbart zum ersten Abschnitt (49A) angeordnet und am ersten Abschnitt (49A) befestigt ist, wobei die Achsenrichtung eine Richtung ist, in der sich die Drehmittelachse (C2) des Walzenteils (49) erstreckt, und eine Außenumfangsfläche des Walzenteils (49) im Querschnitt in der Achsenrichtung bogenförmig gekrümmt ist,
**dadurch gekennzeichnet, dass** der erste Abschnitt (49A) in integrierter Weise ein erstes Basisteil (51A) aus Gusseisen mit hohem Chromgehalt aufweist, das außen an das äußere Umfangsteil des Stützteils (48) angepasst ist, ein Keramikteil (52A) aufweist, das teilweise ein Keramikelement enthält, an einer Außenumfangsfläche des ersten Basisteils (51A) bereitgestellt ist und eine höhere Verschleißfestigkeit als das erste Basisteil (51A) aufweist, und auf einer Seite in Achsenrichtung von einer Mittellinie des Walzenteils (49) aus bereitgestellt ist,
wobei der zweite Abschnitt (49B) in integrierter Weise ein zweites Basisteil (51B) aus Gusseisen mit hohem Chromgehalt aufweist, das außen an das äußere Umfangsteil des Stützteils (48) angepasst ist, ein zweites Keramikteil (52B) aufweist, das teilweise ein Keramikelement enthält, an einer Außenumfangsfläche des zweiten Basisteils (51B) bereitgestellt ist und eine höhere Verschleißfestigkeit als das zweite Basisteil (51B) aufweist, und auf der anderen Seite in Achsenrichtung von der Mittellinie aus bereitgestellt ist,
wobei das erste Keramikteil (52A) und das zweite Keramikteil (52B) so bereitgestellt sind, dass sie in Bezug auf die Mittellinie im Querschnitt in Achsenrichtung liniensymmetrisch sind,
wobei das Walzenteil (49) ein Befestigungsteil (80) aufweist, wobei das Befestigungsteil (80) ein kreiszylindrisches Teil (81), ein erstes Anschlagteil (82) und ein zweites Anschlagteil (83) aufweist, wobei das kreiszylindrische Teil (81) zwischen dem Stützteil (48) und einer Anordnung aus dem ersten Basisteil (51A) und dem zweiten Basisteil (51B) bereitgestellt ist, wobei sich das erste Anschlagteil (82) radial und nach außen von einem Ende des kreiszylindrischen Teils (81) in Achsenrichtung erstreckt und in Achsenrichtung an einer Endfläche des ersten Basisteils (51A) anliegt, und wobei sich das zweite Anschlagteil (83) radial und nach außen vom anderen Ende des kreiszylindrischen Teils (81) in Achsenrichtung erstreckt und in Achsenrichtung an der anderen Stirnfläche des zweiten Basisteils (51B) anliegt,
wobei das erste Basisteil (51A) über das kreiszylindrische Teil (81) außen an das äußere Umfangsteil des Stützteils (48) angepasst ist,
wobei das zweite Basisteil (51B) über das kreiszylindrische Teil (81) außen an das äußere Umfangsteil des Stützteils (48) angepasst ist,
wobei das erste Anschlagteil (82) und das zweite Anschlagteil (83) durch einen durch das Befestigungsteil (80) hindurchgeführten Bolzen miteinander verbunden sind, und
wobei das kreiszylindrische Teil (81) aus einem Material gebildet ist, das eine geringere Härte als das erste Basisteil (51A) und das zweite Basisteil (51B) aufweist.

2. Pulverisierungswalze (13) nach Anspruch 1, wobei der erste Abschnitt (49A) und der zweite Abschnitt (49B) durch ein Befestigungselement aneinander befestigt sind, das durch ein gerades Bolzenloch geführt ist, das durch ein in dem ersten Basisteil (51A) ausgebildetes Loch und ein in dem zweiten Basisteil (51B) ausgebildetes Loch definiert ist, die miteinander in Verbindung stehen.

3. Pulverisierungswalze (13) nach Anspruch 1 oder 2,
wobei das erste Basisteil (51A) und/oder das zweite Basisteil (51B) eine Eingriffsausnehmung aufweist, die von einer an das Stützteil (48) anliegenden Oberfläche zurückgesetzt ist, und
wobei das Stützteil (48) an einer Fläche, die an das erste Basisteil (51A) und/oder das zweite Basisteil (51B) anliegt, einen Eingriffsvorsprung aufweist, wobei der Eingriffsvorsprung mit der Eingriffsausnehmung in Eingriff steht, indem er in der Eingriffsausnehmung aufgenommen wird.

4. Vorrichtung zum Pulverisieren von festen Brennstoffen, umfassend:
die Pulverisierungswalze (13) nach einem der Ansprüche 1 bis 3;
einen Pulverisierungstisch (12), der so ausgelegt ist, dass er sich dreht und festen Brennstoff zwischen der Pulverisierungswalze (13) und dem Pulverisierungstisch (12) hält, um den festen Brennstoff zu pulverisieren; und
ein Gehäuse (11), in dem die Pulverisierungswalze (13) und der Pulverisierungstisch untergebracht sind.

5. Verfahren zur Herstellung einer Pulverisierungswalze (13), die in einem Gehäuse (11) untergebracht ist und so ausgelegt ist, dass sie festen Brennstoff zwischen einem rotierenden Pulverisierungstisch (12) und der Pulverisierungswalze (13) hält, um den festen Brennstoff zu pulverisieren, wobei die Pulverisierungswalze (13) durch die Einwirkung einer Drehkraft seitens des Pulverisierungstisches (12) zur Drehung gezwungen wird, wobei die Pulverisierungswalze (13) umfasst
ein Stützteil (48), das um eine Drehmittelachse (C2) gegenüber dem Gehäuse (11) drehbar gelagert ist, und
ein rundes ringförmiges Walzenteil (49), das außen an ein äußeres Umfangsteil des Stützteils (48) angepasst und so ausgelegt ist, dass es festen Brennstoff zwischen dem Pulverisierungstisch (12) und dem Walzenteil (49) pulverisiert,
wobei das Walzenteil (49) einen ersten Abschnitt (49A) und einen zweiten Abschnitt (49B) aufweist, wobei der zweite Abschnitt (49B) in Achsenrichtung benachbart zum ersten Abschnitt (49A) angeordnet und am ersten Abschnitt (49A) befestigt ist, wobei die Achsenrichtung eine Richtung ist, in der sich die Drehmittelachse (C2) des Walzenteils (49) erstreckt, und eine Außenumfangsfläche des Walzenteils (49) im Querschnitt in der Achsenrichtung bogenförmig gekrümmt ist,
wobei der erste Abschnitt (49A) in integrierter Weise ein erstes Basisteil (51A) aus Gusseisen mit hohem Chromgehalt aufweist, das außen an das äußere Umfangsteil des Stützteils (48) angepasst ist, ein erstes Keramikteil (52A) aufweist, das teilweise ein Keramikelement enthält, an einer Außenumfangsfläche des ersten Basisteils (51A) bereitgestellt ist und eine höhere Verschleißfestigkeit als das erste Basisteil (51A) aufweist, und auf einer Seite in Achsenrichtung von einer Mittellinie des Walzenteils (49) aus bereitgestellt ist,
wobei der zweite Abschnitt (49B) in integrierter Weise ein zweites Basisteil (51B) aus Gusseisen mit hohem Chromgehalt aufweist, das außen an das äußere Umfangsteil des Stützteils (48) angepasst ist, ein zweites Keramikteil aufweist, das teilweise ein Keramikelement enthält , das an einer Außenumfangsfläche des zweiten Basisteils (51B) bereitgestellt ist und eine höhere Verschleißfestigkeit als das zweite Basisteil (51B) aufweist, und auf der anderen Seite in Achsenrichtung von der Mittellinie aus bereitgestellt ist,
wobei das erste Keramikteil (52A) und das zweite Keramikteil (52B) so bereitgestellt sind, dass sie in Bezug auf die Mittellinie im Querschnitt in Achsenrichtung liniensymmetrisch sind,
wobei das Walzenteil (49) ein Befestigungsteil (80) aufweist, wobei das Befestigungsteil (80) ein kreiszylindrisches Teil (81), ein erstes Anschlagteil (82) und ein zweites Anschlagteil (83) aufweist, wobei das kreiszylindrische Teil (81) zwischen dem Stützteil (48) und einer Anordnung aus dem ersten Basisteil (51A) und dem zweiten Basisteil (51B) bereitgestellt ist, wobei sich das erste Anschlagteil (82) radial und nach außen von einem Ende des kreiszylindrischen Teils (81) in Achsenrichtung erstreckt und in Achsenrichtung an einer Endfläche des ersten Basisteils (51A) anliegt, und wobei sich das zweite Anschlagteil (83) radial und nach außen vom anderen Ende des kreiszylindrischen Teils (81) in Achsenrichtung erstreckt und in Achsenrichtung an der anderen Stirnfläche des zweiten Basisteils (51B) anliegt,
wobei das erste Basisteil (51A) über das kreiszylindrische Teil (81) außen an das äußere Umfangsteil des Stützteils (48) angepasst ist,
wobei das zweite Basisteil (51B) über das kreiszylindrische Teil (81) außen an das äußere Umfangsteil des Stützteils (48) angepasst ist,
wobei das erste Anschlagteil (82) und das zweite Anschlagteil (83) durch einen durch das Befestigungsteil (80) hindurchgeführten Bolzen miteinander verbunden sind, und
wobei das kreiszylindrische Teil (81) aus einem Material besteht, das eine geringere Härte als der erste Basisteil (51A) und das zweite Basisteil (51B) aufweist,
wobei das Herstellungsverfahren die folgende Schritte umfasst:
Herstellen des ersten Abschnitts (49A);
Herstellen des zweiten Abschnitts (49B); und
Befestigen des ersten Abschnitts (49A) und des zweiten Abschnitts (49B) aneinander.

6. Verfahren zur Herstellung einer Pulverisierungswalze (13) nach Anspruch 5, wobei der Schritt des Herstellens des zweiten Abschnitts (49B) und der Schritt des Befestigens des ersten Abschnitts (49A) und des zweiten Abschnitts (49B) aneinander in einem Zustand, in dem der im Schritt des Herstellens des ersten Abschnitts (49A) hergestellte erste Abschnitt (49A) innerhalb einer Form angeordnet ist, deren Form der Pulverisierungswalze entspricht, es einschließt, geschmolzenes Metall in die Form zu gießen und anschließend das geschmolzene Metall abzukühlen, um den zweiten Abschnitt (49B) herzustellen und den ersten Abschnitt (49A) sowie den zweiten Abschnitt (49B) in integrierter Weise miteinander zu verbinden.

7. Verfahren zur Herstellung einer Pulverisierungswalze (13) nach Anspruch 6, wobei der erste Abschnitt (49A) einen Vorsprung aufweist, der von einer Oberfläche auf der Seite des zweiten Abschnitts vorsteht.

## Revendications

1. Rouleau de pulvérisation (13) logé dans un boîtier (11) et configuré pour contenir du combustible solide entre une table de pulvérisation (12) rotative et le rouleau de pulvérisation (13) pour pulvériser le combustible solide, le rouleau de pulvérisation (13) étant forcé à effectuer une rotation en étant soumis à une force de rotation provenant de la table de pulvérisation (12), le rouleau de pulvérisation (13) comprenant :
une partie de support (48) portée de manière rotative autour d'un axe central de rotation (C2) par rapport au boîtier (11) ; et
une partie rouleau (49) annulaire circulaire montée de manière externe sur une partie circonférentielle extérieure de la partie de support (48) et configurée pour pulvériser du combustible solide entre la table de pulvérisation (12) et la partie rouleau (49),
dans lequel la partie rouleau (49) comporte une première portion (49A) et une seconde portion (49B), la seconde portion (49B) étant agencée de manière adjacente à la première portion (49A) dans une direction d'axe et fixée à la première portion (49A), la direction d'axe étant une direction dans laquelle l'axe central de rotation (C2) de la partie rouleau (49) s'étend, et une face de circonférence extérieure de la partie rouleau (49) est incurvée selon une forme d'arc dans une section transversale dans la direction d'axe,
**caractérisé en ce que** la première portion (49A) comporte, d'une manière solidaire, une première partie de base (51A) constituée de fonte à haute teneur en chrome montée de manière externe sur la partie circonférentielle extérieure de la partie de support (48), comporte une partie en céramique (52A), contenant partiellement un élément en céramique, ménagée sur une face circonférentielle extérieure de la première partie de base (51A) et ayant une plus grande résistance à l'usure que la première partie de base (51A), et est ménagée sur un côté dans la direction d'axe par rapport à une ligne centrale de la partie rouleau (49),
dans lequel la seconde portion (49B) comporte, d'une manière solidaire, une seconde partie de base (51B) constituée de fonte à haute teneur en chrome montée de manière externe sur la partie circonférentielle extérieure de la partie de support (48), comporte une seconde partie en céramique (52B), contenant partiellement un élément en céramique, ménagée sur une face circonférentielle extérieure de la seconde partie de base (51B) et ayant une plus grande résistance à l'usure que la seconde partie de base (51B), et est ménagée sur l'autre côté dans la direction d'axe par rapport à la ligne centrale,
dans lequel la première partie en céramique (52A) et la seconde partie en céramique (52B) sont ménagées pour être en symétrie axiale par rapport à la ligne centrale dans la section transversale dans la direction d'axe,
dans lequel la partie rouleau (49) comporte une partie de fixation (80), la partie de fixation (80) comportant une partie cylindrique circulaire (81), une première partie de butée (82) et une seconde partie de butée (83), la partie cylindrique circulaire (81) étant ménagée entre la partie de support (48) et un ensemble de la première partie de base (51A) et de la seconde partie de base (51B), la première partie de butée (82) s'étendant radialement et vers l'extérieur à partir d'une extrémité de la partie cylindrique circulaire (81) dans la direction d'axe et étant en butée contre une face d'extrémité de la première partie de base (51A) dans la direction d'axe, et la seconde partie de butée (83) s'étendant radialement et vers l'extérieur à partir de l'autre extrémité de la partie cylindrique circulaire (81) dans la direction d'axe et étant en butée contre l'autre face d'extrémité de la seconde partie de base (51B) dans la direction d'axe,
dans lequel la première partie de base (51A) est montée de manière externe sur la partie circonférentielle extérieure de la partie de support (48) par l'intermédiaire de la partie cylindrique circulaire (81),
dans lequel la seconde partie de base (51B) est montée de manière externe sur la partie circonférentielle extérieure de la partie de support (48) par l'intermédiaire de la partie cylindrique circulaire (81),
dans lequel la première partie de butée (82) et la seconde partie de butée (83) sont fixées l'une à l'autre par un boulon inséré à travers la partie de fixation (80), et
dans lequel la partie cylindrique circulaire (81) est formée d'un matériau ayant une plus faible dureté que la première partie de base (51A) et la seconde partie de base (51B).

2. Rouleau de pulvérisation (13) selon la revendication 1, dans lequel la première portion (49A) et la seconde portion (49B) sont fixées l'une à l'autre par une attache insérée à travers un trou de boulon droit défini par un trou formé dans la première partie de base (51A) et un trou formé dans la seconde partie de base (51B) communiquant l'un avec l'autre.

3. Rouleau de pulvérisation (13) selon la revendication 1 ou 2,
dans lequel la première partie de base (51A) et/ou la seconde partie de base (51B) comporte un creux de mise en prise creusé par rapport à une surface en butée contre la partie de support (48), et
dans lequel la partie de support (48) comporte une saillie de mise en prise sur une surface en butée contre la première partie de base (51A) et/ou la seconde partie de base (51B), la saillie de mise en prise étant mise en prise avec le creux de mise en prise en étant logée dans le creux de mise en prise.

4. Dispositif de pulvérisation de combustible solide comprenant :
le rouleau de pulvérisation (13) selon l'une quelconque des revendications 1 à 3 ;
une table de pulvérisation (12) configurée pour effectuer une rotation et contenir du combustible solide entre le rouleau de pulvérisation (13) et la table de pulvérisation (12) pour pulvériser le combustible solide ; et
un boîtier (11) logeant le rouleau de pulvérisation (13) et la table de pulvérisation.

5. Procédé de fabrication d'un rouleau de pulvérisation (13) logé dans un boîtier (11) et configuré pour contenir du combustible solide entre une table de pulvérisation (12) rotative et le rouleau de pulvérisation (13) pour pulvériser le combustible solide, le rouleau de pulvérisation (13) étant forcé à effectuer une rotation en étant soumis à une force de rotation provenant de la table de pulvérisation (12), dans lequel le rouleau de pulvérisation (13) comprend
une partie de support (48) portée de manière rotative autour d'un axe central de rotation (C2) par rapport au boîtier (11), et
une partie rouleau (49) annulaire circulaire montée de manière externe sur une partie circonférentielle extérieure de la partie de support (48) et configurée pour pulvériser du combustible solide entre la table de pulvérisation (12) et la partie rouleau (49),
dans lequel la partie rouleau (49) comporte une première portion (49A) et une seconde portion (49B), la seconde portion (49B) étant agencée de manière adjacente à la première portion (49A) dans une direction d'axe et fixée à la première portion (49A), la direction d'axe étant une direction dans laquelle l'axe central de rotation (C2) de la partie rouleau (49) s'étend, et une face de circonférence extérieure de la partie rouleau (49) est incurvée selon une forme d'arc dans une section transversale dans la direction d'axe,
dans lequel la première portion (49A) comporte, d'une manière solidaire, une première partie de base (51A) constituée de fonte à haute teneur en chrome montée de manière externe sur la partie circonférentielle extérieure de la partie de support (48), comporte une première partie en céramique (52A), contenant partiellement un élément en céramique, ménagée sur une face circonférentielle extérieure de la première partie de base (51A) et ayant une plus grande résistance à l'usure que la première partie de base (51A), et est ménagée sur un côté dans la direction d'axe par rapport à une ligne centrale de la partie rouleau (49),
dans lequel la seconde portion (49B) comporte, d'une manière solidaire, une seconde partie de base (51B) constituée de fonte à haute teneur en chrome montée de manière externe sur la partie circonférentielle extérieure de la partie de support (48), comporte une seconde partie en céramique, contenant partiellement un élément en céramique, ménagée sur une face circonférentielle extérieure de la seconde partie de base (51B) et ayant une plus grande résistance à l'usure que la seconde partie de base (51B), et est ménagée sur l'autre côté dans la direction d'axe par rapport à la ligne centrale,
dans lequel la première partie en céramique (52A) et la seconde partie en céramique (52B) sont ménagées pour être en symétrie axiale par rapport à la ligne centrale dans la section transversale dans la direction d'axe,
dans lequel la partie rouleau (49) comporte une partie de fixation (80), la partie de fixation (80) comportant une partie cylindrique circulaire (81), une première partie de butée (82) et une seconde partie de butée (83), la partie cylindrique circulaire (81) étant ménagée entre la partie de support (48) et un ensemble de la première partie de base (51A) et de la seconde partie de base (51B), la première partie de butée (82) s'étendant radialement et vers l'extérieur à partir d'une extrémité de la partie cylindrique circulaire (81) dans la direction d'axe et étant en butée contre une face d'extrémité de la première partie de base (51A) dans la direction d'axe, et la seconde partie de butée (83) s'étendant radialement et vers l'extérieur à partir de l'autre extrémité de la partie cylindrique circulaire (81) dans la direction d'axe et étant en butée contre l'autre face d'extrémité de la seconde partie de base (51B) dans la direction d'axe,
dans lequel la première partie de base (51A) est montée de manière externe sur la partie circonférentielle extérieure de la partie de support (48) par l'intermédiaire de la partie cylindrique circulaire (81),
dans lequel la seconde partie de base (51B) est montée de manière externe sur la partie circonférentielle extérieure de la partie de support (48) par l'intermédiaire de la partie cylindrique circulaire (81),
dans lequel la première partie de butée (82) et la seconde partie de butée (83) sont fixées l'une à l'autre par un boulon inséré à travers la partie de fixation (80), et
dans lequel la partie cylindrique circulaire (81) est formée d'un matériau ayant une plus faible dureté que la première partie de base (51A) et la seconde partie de base (51B),
le procédé de fabrication comprenant les étapes de :
la fabrication de la première portion (49A) ;
la fabrication de la seconde portion (49B) ; et
la fixation de la première portion (49A) et de la seconde portion (49B) l'une à l'autre.

6. Procédé de fabrication d'un rouleau de pulvérisation (13) selon la revendication 5, dans lequel l'étape de fabrication de la seconde portion (49B) et l'étape de fixation de la première portion (49A) et de la seconde portion (49B) l'une à l'autre incluent, dans un état où la première portion (49A) fabriquée à l'étape de fabrication de la première portion (49A) est agencée à l'intérieur d'un moule ayant une forme correspondant au rouleau de pulvérisation, le versement de métal en fusion dans le moule, et ensuite, le refroidissement du métal en fusion pour fabriquer la seconde portion (49B) et fixer la première portion (49A) et la seconde portion (49B) l'une à l'autre d'une manière solidaire.

7. Procédé de fabrication d'un rouleau de pulvérisation (13) selon la revendication 6, dans lequel la première portion (49A) comporte une partie saillante faisant saillie à partir d'une surface sur le côté seconde portion.
